# EUROPEAN PATENT APPLICATION

(11) **EP 2 741 260 A1**
(43) Date of publication of application: **11.06.2014**
(21) Application number: 12195769.0
(22) Date of filing: 06.12.2012
(51) Int. Cl.: G06T 19/00

(54) **Method and user interface system for adapting a graphic visualization of a virtual element**

(71) Applicant: Volvo Car Corporation, 40 531 Göteborg (SE)
(72) Inventor: Edgren, Claes, 46154 Trollhättan (SE)
(74) Representative: Kraenzmer, Martin

(57) **Abstract**

The present disclosure relates to a method performed by a user interface system (2) for adapting a graphic visualization (13) of a virtual element (14) on a display (3) to render a corresponding fictitious physical element. The user interface system determines (401) surrounding light characteristics of surrounding light associated with the display, and determines (403) light adjusted characteristics of the virtual element based on the surrounding light characteristics. Furthermore, the user interface system adapts (405) the graphic visualization based on the light adjusted characteristics, such that the graphic visualization resembles the fictitious physical element should the fictitious physical element have been subjected to the surrounding light.

The disclosure also relates to a user interface system in accordance with the foregoing, as well as a vehicle (1) comprising such a user interface.

By considering surrounding light conditions prior to adapting the graphic visualization as suggested, the graphic visualization may change appearance depending on surrounding light conditions. The rendering may accordingly change dynamically when the surrounding light conditions change, similar to the appearance of true physical elements, thus providing a more realistic appearance of the graphic visualization.

## Description

### TECHNICAL FIELD

The present disclosure relates to a user interface system and a method performed therein for adapting a graphic visualization of a virtual element on a display to render a corresponding fictitious physical element.

### BACKGROUND

Utilization of displays to digitally present output to a user has been, and still is, on rampage. Further use 3of displays to interact with the user via touch screen functionality, to thereby enable the user to provide input, similarly continues to grow rapidly. New areas of implementation are constantly emerging, and displays may be found associated with a wide variety of products, such as computers and electronic devices just to name a few, which for instance may be handheld or integrated in e.g. a vehicle. Displays of vehicles, e.g. such being associated with infotainment systems, are commonly utilized to provide output, such as indicators, to the e.g. driver, and/or to provide said driver with control functions, such as virtual buttons, wheels or knobs, selectable via the display.

With better resolution and color reproduction as a result of display technologies constantly evolving, graphical designers are given more leeway with regards to graphic visualization of output to be displayed. For instance, output in the form of a button formerly depicted merely schematically as a button-sized square box with a text in the middle, may now be visualized with higher similarity with a physical button, where shapes and added shadows may provide a more realistic appearance. US 2012/0107566, for instance, relates to a device for providing improved access to the functions of HMIs (Human-machine interfaces) without requiring the addition of physical buttons. A virtual button is disclosed which may include a "pressed" and "unpressed" image reflecting the virtual button's two possible states. Typically, a shadow box surrounds the selected virtual button and changes shade in response to the state thereof so as to mimic a real button being depressed or released.

Although there are improvements suggested with regards to enabling graphic visualizations of output to more realistically resemble true physical elements, such as e.g. buttons, graphic visualizations may still be considered to lack a natural look. Such lack of resemblance may implicate that the e.g. button is more difficult to identify than a corresponding physical button, and may take longer time to find. For instance, with regards to graphic visualizations on a display of a vehicle, a longer finding time may implicate a higher degree of driver inattention.

### SUMMARY OF THE INVENTION

It is therefore an object of embodiments herein to provide an improved way of adapting a graphic visualization of a virtual element on a display to render a corresponding fictitious physical element.

According to a first aspect of embodiments herein, the object is achieved by a method performed by a user interface system for adapting a graphic visualization of a virtual element on a display to render a corresponding fictitious physical element. The user interface system determines surrounding light characteristics of surrounding light associated with the display, and determines light adjusted characteristics of the virtual element based on the surrounding light characteristics. Furthermore, the user interface system adapts the graphic visualization based on the light adjusted characteristics, such that the graphic visualization resembles the fictitious physical element should the fictitious physical element have been subjected to the surrounding light. Thereby, by considering surrounding light conditions prior to adapting the graphic visualization as suggested, the graphic visualization may change appearance depending on surrounding light conditions. The rendering may accordingly change dynamically when the surrounding light conditions change, similar to the appearance of true physical elements, thus providing a more realistic appearance of the graphic visualization. For that reason, adapting a graphic visualization of a virtual element on a display to render a corresponding fictitious physical element has been improved.

Another advantage is that the more realistic appearance of the graphic visualization may imply that a conservative user of physical elements, e.g. physical buttons, may not be as hesitative to utilize the virtual element, e.g. the virtual button, as if the virtual element had been less realistically rendered.

Yet another advantage of the more realistic appearance of the graphic visualization is that the graphic visualization may be more easily identifiable, which, should the display be provided in a vehicle, may implicate that the time a e.g. driver's attention is required for identifying the graphic visualization may be decreased, and subsequently driving safety improved.

The technical features and corresponding advantages of the above mentioned method will be discussed in further detail in the following.

By fictitious physical element is here intended in imaginary physical element, which the graphical visualization of the virtual element is designed to resemble. Furthermore, "display" is intended to be interpreted in a broad manner, likewise including at least "screen". In some sense, the display need not necessarily be a digital display, but may even be represented by any suitable surface functioning as an information display for projecting a graphic visualization of a virtual element, e.g. a windscreen, or a head-up display. The field of implementation of the display may be arbitrary, and the display may for example be associated with an electronic device, which for instance may be stationary, portable, pocket-storable, hand-held, or vehicle-mounted. The electronic device may for instance be an arbitrary control unit, a mobile phone, a computer such as e.g. a laptop, a Personal Digital Assistant (PDA) or tablet computer, sometimes referred to as a surf plate, an iPad, a camera, or a gaming machine.

Since the user interface system determines surrounding light characteristics of surrounding light associated with the display, the user interface system may thus consider the surrounding light conditions currently applicable for the display. Accordingly, changes with regards to the surrounding light may have effect on the surrounding light characteristics. How often the surrounding light characteristics are determined may be arbitrary, and may be accomplished e.g. by means of a light determining unit, which may be implemented in a variety of manners. The user interface system may for instance learn of the surrounding light from one or several sensors, or alternatively from broadcasted or retrieved weather forecast data in combination with positioning data. In the latter case, positioning data may for instance be retrieved from GPS and/or gyro sensors enabling for detection of position, time and direction of e.g. a vehicle, which may provide sufficient information about positioning in relation to e.g. the sun. Associated with" is here intended to be interpreted to likewise include at least "in front of", "close to", "nearby", "in the vicinity of', "surrounding", and "affecting".

Furthermore, since the user interface system determines light adjusted characteristics of the virtual element based on the surrounding light characteristics, changes of the surrounding light characteristics, and subsequently of the surrounding light, may thus imply changes to the light adjusted characteristics. Determining the light adjusted characteristics may implicate that a variety of properties of the surrounding light characteristics are considered, and determination thereof may be accomplished, for instance, by means of an adjustment determining unit. "Based on" is throughout this disclosure intended to be interpreted to likewise include at least "utilizing", "considering" and "taking into account",

Furthermore, since the user interface system adapts the graphic visualization based on the light adjusted characteristics, such that the graphic visualization resembles the fictitious physical element should the fictitious physical element have been subjected to the surrounding light, a more realistic appearance of the graphic visualization may be provided. Adapting the graphic visualization may implicate that a variety of areas such as sections and/or pixels of the graphic visualization are adjusted. The adaptation may be accomplished, for instance, by means of an adapting unit, and may be implemented in a variety of manners. "Adapting" is here intended to be interpreted to likewise include at least "adjusting", "refining", "modifying" and "conforming".

According to an embodiment, the surrounding light may comprise ambient light and/or intensive directed light which is intensive relative to the ambient light. Furthermore, the surrounding light characteristics may comprise an ambient light property related to determined ambient light. Additionally, the surrounding light characteristics may comprise an intensive directed light property related to determined intensive directed light, and/or an intensive directed light direction property related to a determined direction of the intensive directed light. Thereby, an ambient light property, an intensive directed light property and/or an intensive directed light property is considered in the rendering process.

The ambient light may be any surrounding arbitrary light, and determined ambient light may comprise measured total non-directional luminance, for instance for light with wavelengths in the visible range of 400-700 nm. In general, a physical element may look different depending on the surrounding ambient light, i.e. a cloudy day may give soft shadows to the physical element and twilight may imply that the shape of the physical element is less distinct. Accordingly, by taking the ambient light property, and subsequently amount of determined ambient light, into consideration in the rendering process as suggested by said embodiment, the graphic visualization may be adapted in accordance with varying values of the ambient light property. For instance, relatively low determined ambient light may result in the graphic visualization being adapted such that shape and contours are rendered barely visible, thus resembling a corresponding fictitious physical element subjected to the corresponding ambient light in a true manner.

By indicating that the intensive directed light is intensive "relative to" the ambient light, it is intended to distinguish the intensive directed light from the ambient light. How much more intensive the intensive directed light at least should be in comparison to the ambient light may vary with the application at hand, and with the surrounding light conditions. That is, directed light which during daylight would not be considered intensive, may be considered to be so during e.g. twilight, such as light from a light pole. According to one example, judgement of whether or not light should be considered as intensive directed light may be determined by comparing relative luminance or radiance between a brightest light source and luminance of e.g. the sky.

The intensive directed light may be directional light from one or several light sources, and determined intensive directional light may comprise measured directional light in the main direction of the light source, for instance for light with wavelengths in the visible range of 400-700 nm or the infrared spectrum of 700-1100 nm. The intensive directed light may originate from arbitrary spotlights such as e.g. lamps, bulbs and/or LEDs, and thus from e.g. street lighting, floodlight and/or courtesy light. According to one embodiment, the intensive directed light substantially comprises sun light. In general, a physical element may look different depending on characteristics of intensive directed light which the physical element is subjected to, and the direction thereof, in that the intensive directed light may create, among other things, the impression of the physical element having higher contrast with sharp shadows dependent of the direction. Accordingly, by taking the intensive directed light property and the intensive directed light direction property, and subsequently amount and direction of determined intensive directed light, into consideration in the rendering process as suggested by embodiments herein, the graphic visualization may be adapted in accordance with varying values of the intensive directed light property and/or the intensive directed light direction property. Thereby, an intensive directed light property and an intensive directed light direction property of one combination may differ from another combination, whereby the graphic visualization of the virtual object may be adapted differently for the two of them, such that each resembles a corresponding fictitious physical element subjected to the corresponding combination of intensive directed light property and intensive directed light direction property realistically.

According to a further embodiment, the light adjusted characteristics may comprise one or a combination of a shadow property, an intensity property, an illumination property, a gloss property, a hue property, a color property, and a contrast property. The properties may relate to respective specific adjustments of the graphic visualization which are relevant given the current surrounding light characteristics. Different properties may concern modifications of different areas, such as sections or e.g. pixels, of the graphic visualization, and one and the same property may concern different changes to different areas. The shadow property may for instance relate to relevant refinements of the graphic visualization to embed a virtual shadow resembling a shadow of a corresponding fictitious physical element subjected to the corresponding surrounding light conditions. In a similar manner, the intensity property may relate to refinements concerning intensity of the graphic visualization, the illumination property concerning modifications of the graphic visualization illumination, and the gloss property, hue property, color property and contrast property concerning adjustments of gloss, hue, color and contrast, respectively.

According to yet another embodiment, the user interface system may further determine the shadow property based on at least the intensive directed light direction property, and adapt the graphic visualization based on at least the shadow property such that a virtual shadow of the virtual element are applied in the graphic visualization to resemble a shadow of the fictitious physical element should the fictitious physical element have been subjected to the intensive directed light. In general, a physical element may look different depending on direction of intensive directed light by which it is affected, in that the intensive directed light may create sharp shadows of the physical element dependent of the direction. Accordingly, by taking the intensive directed light direction property, and subsequently direction of determined intensive directed light, into consideration when determining the shadow property in the rendering process as suggested by said embodiment, the graphic visualization may be adjusted such that the embedded virtual shadow resemble the shadow of the fictitious physical element should the fictitious physical element have been subjected to the intensive directed light.

The imagined fictitious physical element, and hence a graphical representation of the virtual element thereof, i.e. the graphic visualization without surrounding light taken into consideration, may have a design depending on the application at hand. According to an embodiment, the virtual element comprises a graphical representation of one of, or a combination of one or several of, 3-dimensional elements labelled with characters or symbols such as letters and numbers, markings, meters, and gauges, and/or objects or instruments such as bezels, buttons, knobs, and wheels. Thereby, a variety of combinations are introduced, and thus covered by the scope of this disclosure.

The user interface system may adapt the graphic visualization by calculations performed locally or remotely essentially in real time. According to an embodiment, however, the user interface system may select a graphic visualization profile to represent the graphic visualization from a set of predefined graphic visualization profiles. That is, rather than performing calculations, the user interface system adapts the graphic visualization by selection, out of a predefined number of available graphic visualization profiles, a graphic visualization profile which constitute a good fit for the surrounding light conditions. In other words, the best-fitting graphic visualization out of a set of pre-rendered graphic visualization profiles may be selected. Thereby, the amount of calculations required may be decreased, and hence computing resources be reduced. The set of profiles is for instance stored in a memory comprised in, or easily accessible by, the user interface system. The number of available graphic visualization profiles may for instance range from 5-500, more preferred from 10-400, and most preferred from 20-100.

According to an embodiment, the user interface system may determine vicinity obstacle characteristics of an obstacle in the vicinity of the display, which obstacle is within 180 degrees seen from all solid angles of a front of the display. The user interface may furthermore determine light adjusted characteristics of the virtual element based on the surrounding light characteristics and the vicinity obstacle characteristics. Thereby, when determining the light adjusted characteristics, the user interface system does not only consider previously discussed surrounding light characteristics, but additionally vicinity obstacle characteristics. Accordingly, obstacles close to the front of the display, within 180 degrees thereof, may hence be taken into account in the rendering process. The obstacle may be any arbitrary object in the vicinity of the display, for instance a hand, or one or several fingers thereof. Determination of the vicinity obstacle characteristics may be accomplished, for instance, by means of at least a vicinity obstacle determining unit, and may be implemented in a variety of manners, for instance by means of one or several sensors, such as a proximity sensor, IR sensor, capacitive sensor and/or a sensor related to detection of light. "In the vicinity of" is here intended to be interpreted to likewise include at least "close to", "nearby", and "affecting by means of casting a shadow". Furthermore, the "front" of the display is here intended to be interpreted as the side of the display on which the graphic visualization is presented.

According to a further embodiment, the vicinity obstacle characteristics may comprise an obstacle distance property related to a determined distance of the obstacle from the display, and/or an obstacle shape property related to a determined shape of the obstacle. Thereby, an obstacle distance property and/or an obstacle shape property thus reflecting essential characteristics of the obstacle may be considered in the rendering process.

According to yet another embodiment, the user interface system may determine the shadow property based on at least the intensive directed light direction property and at least the obstacle distance property and/or the obstacle shape property. Furthermore, the user interface system may adapt the graphic visualization based on at least the shadow property such that a virtual shadow of the virtual element is applied in the graphic visualization to resemble a shadow of the fictitious physical element should the fictitious physical element have been subjected to the intensive directed light and the obstacle. Thereby, when determining the shadow property, the user interface system does not only consider the previously discussed intensive directed light direction property, but additionally the obstacle distance property and/or the obstacle shape property. Subsequently, in adapting the graphic visualization, not only do the embedded virtual shadow resemble a shadow of the fictitious physical element should the fictitious physical element have been subjected to the intensive directed light, but rather do the embedded virtual shadow resemble a shadow of the fictitious physical element should the fictitious physical element have been subjected to the intensive directed light, and in addition thereto, the obstacle. The virtual shadow may hence be considered to be based at least on an estimated projection of the obstacle on the part of the display allocated to the graphic visualization. The fictitious physical element having been "subjected to" the obstacle may here imply the obstacle casting a shadow on the fictitious physical element. For instance, in approaching the display with a finger(s), should the vicinity obstacle characteristics in combination with the surrounding light characteristics indicate that the obstacle appears to cast a shadow on the section of the display allocated to the graphic visualization, then the rendering process may take as well the obstacle into account when embedding the virtual shadow to thereby provide a more realistic appearance of the graphic visualization.

According to a second aspect of embodiments herein, the object is achieved by a user interface system for adapting a graphic visualization of a virtual element on a display to render a corresponding fictitious physical element. The user interface system comprises the display, a light determining unit for determining surrounding light characteristics of surrounding light associated with the display, an adjustment determining unit for determining light adjusted characteristics of the virtual element based on the surrounding light characteristics, and an adapting unit for adapting the graphic visualization based on the light adjusted characteristics, such that the graphic visualization resembles the fictitious physical element should the fictitious physical element have been subjected to the surrounding light. Similar advantages as those mentioned in the foregoing correspondingly apply, why these are not further discussed.

According to a further embodiment, the user interface system may further comprise a vicinity obstacle determining unit for determining vicinity obstacle characteristics of an obstacle in the vicinity of the display, which obstacle is within 180 degrees seen from all solid angles of a front of the display. Furthermore, the adjustment determining unit may further be adapted for determining light adjusted characteristics of the virtual element based on the surrounding light characteristics and the vicinity obstacle characteristics. Once again, similar advantages as those mentioned in the foregoing correspondingly apply, why these are not further discussed.

According to an embodiment, the light determining unit may comprise one, or a combination of, sensors, such as an ambient light sensor, a light intensity sensor, e.g. a sun intensity sensor, a light frequency sensor, and a light direction sensor, e.g. a sun direction sensor or a climate sun sensor, and/or the vicinity obstacle determining unit may comprise one or a combination of sensors, such as a vicinity sensor, e.g. a proximity sensor. Thereby, a variety of known sensors is suggested, by means of which surrounding light characteristics and/or vicinity obstacle characteristics may be detected. In order to implement the user interface system in an efficient, cost effective and fairly simple manner, resources already implemented in association with electronic devices for other purposes than those covered by this disclosure, may preferably be reused. Accordingly, for instance light sensors related to camera functionality of mobile phones, or climate system sensors in vehicles configured to detect sun load as well as sun direction, may preferably be utilized.

According to yet another embodiment, the display may comprise a touch screen. Thereby, a user may be given the opportunity to interact, e.g. provide input, via the display.

As previously mentioned, the user interface system may be implemented in association with any suitable arbitrary electronic device. Specifically however, according to a third aspect of embodiments herein, the object is achieved by a vehicle comprising the user interface system previously mentioned, where the display is fixedly mounted in the vehicle. Furthermore, the display is preferably comprised in an instrument panel, a center stack, a cluster and/or a dashboard of the vehicle. Yet again, similar advantages as those mentioned in the foregoing correspondingly apply, why these are not further discussed. The vehicle may be any arbitrary vehicle, such as e.g. a car, bus, truck, motorcycle, vessel such as a ship or aero plane, in which displays advantageously are provided. Furthermore, in general, the display may be arbitrarily mounted within the vehicle, for instance on the back or backrest of a vehicle seat to face potential back seat passengers, or integrated for instance in a vehicle door for e.g. window and/or door lock/unlock control.

### BRIEF DESCRIPTION OF THE DRAWINGS

The various aspects of the non-limiting embodiments of the invention, including particular features and advantages, will be readily understood from the following detailed description and the accompanying drawings, in which:
Figure 1 illustrates an exemplifying vehicle comprising a user interface system for adapting a graphic visualization of a virtual element to render a corresponding fictitious physical element according to embodiments of the disclosure;
Figure 2 is a schematic block diagram illustrating a user interface system according to embodiments of the invention;
Figure 3 shows an exemplifying obstacle in the vicinity of the display according to embodiments of the disclosure;
Figure 4 is a flowchart depicting an exemplifying method for adapting the graphic visualization of a virtual element according to embodiments of the disclosure;
Figures 5a-e show varying exemplifying graphic visualizations of the virtual element of Figure 1 rendering a fictitious physical element, which is subjected to varying surrounding light; and
Figure 6a-e illustrate exemplifying graphic visualizations of virtual elements rendering varying fictitious physical elements according to embodiments of the disclosure.

### DETAILED DESCRIPTION

The non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to adapting a graphic visualization of a virtual element on a display to render a corresponding fictitious physical element, there will be disclosed that rendering may change dynamically with changing surrounding light conditions such that the graphic visualization may resemble a true appearance of the fictitious physical element.

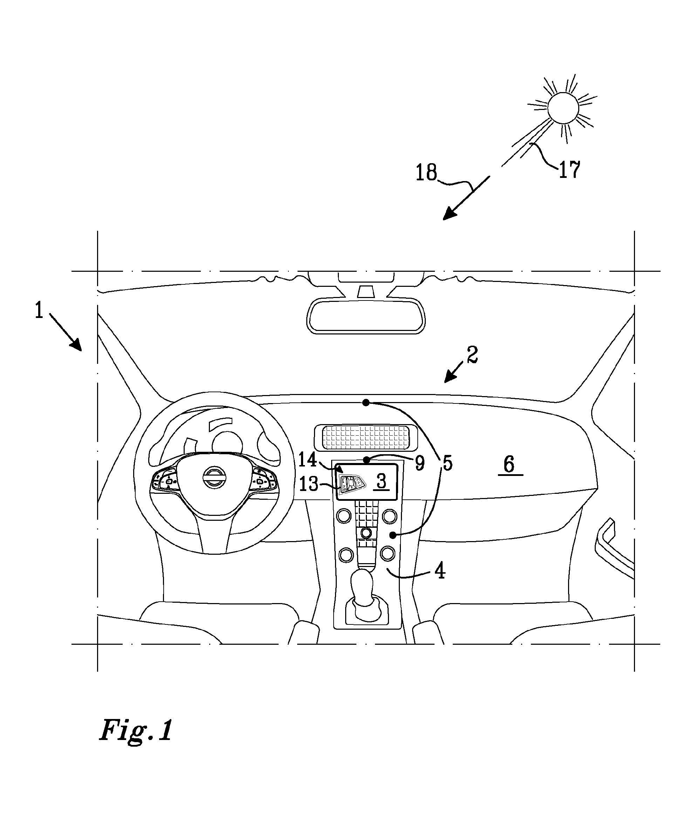

Referring now to the figures and **Figure 1** in particular, there is depicted **intensive directed light 17,** here substantially comprising sun light, in the **determined direction 18** of the intensive directed light. Furthermore, there is provided an exemplifying **vehicle 1,** here a car, comprising a **user interface system 2** for adapting a **graphic visualization 13** of a **virtual element 14** on a **display 3,** to render a corresponding fictitious physical element, in accordance with embodiments herein. The fictitious physical element is in the shown example a combination of buttons and a wheel, whereby a graphical representation thereof comprised in the virtual element 14, i.e. the graphic visualization 13, is visualized with a corresponding set of buttons and a wheel. The user interface system 2 comprises the display 3, and the display 3 is here fixedly mounted in the vehicle 1, comprised in a **center stack 4** of the vehicle 1. Here, the display 3 comprises a touch screen, thus enabling a user, e.g. a driver of the vehicle 1, to interact therewith. The user interface system 2 furthermore comprises a **light determining unit 5**, which here is represented by a plurality of exemplifying sensors, namely an ambient light sensor and a climate sun sensor. The ambient light sensor is according to the shown embodiment positioned in the center stack 4 and the climate sun sensor in, or on the top of, a **dashboard 6** of the vehicle. Additionally, the user interface system 2 comprises an optional **vicinity obstacle determining unit 9,** which here is represented by a proximity sensor 9 positioned close to the display 3. Naturally, other combinations of sensors and varying positioning of the same are likewise feasible.

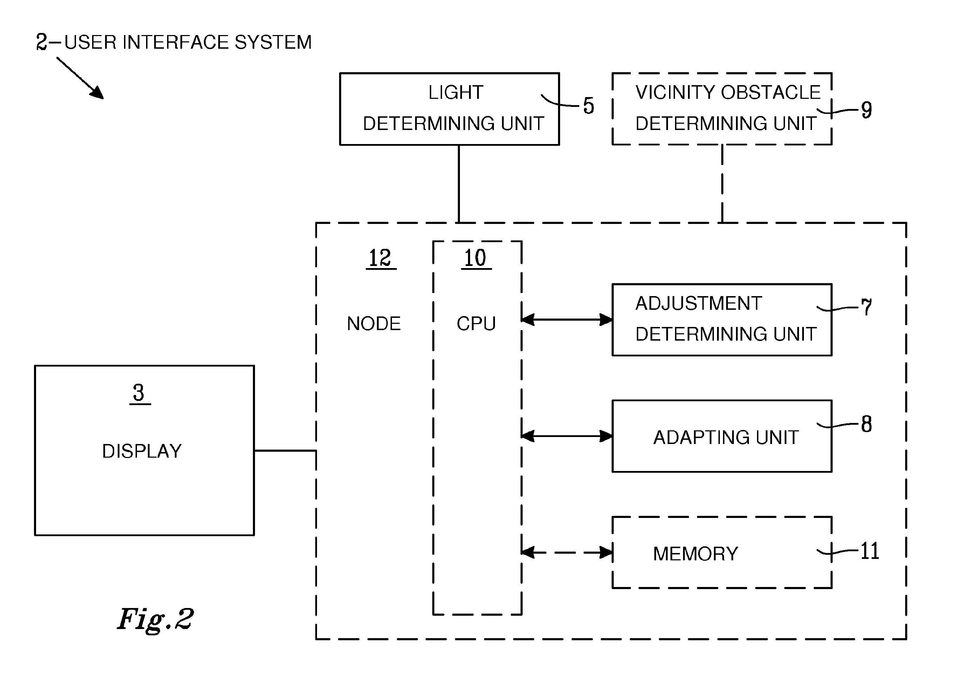

As further shown in **Figure 2****,** which depicts is a schematic block diagram illustrating a user interface system 2 according to embodiments of the invention, the user interface 2 additionally comprises an **adjustment determining unit 7** and an **adapting unit 8.** Furthermore, the embodiments herein for adapting the graphic visualization 13 of the virtual element 14 to render the corresponding fictitious physical element may be implemented through one or more processors, such as a **processor 10,** together with computer program code for performing the functions and actions of the embodiments herein. Said program code may also be provided as a computer program product, for instance in the form of a data carrier carrying computer program code for performing the embodiments herein when being loaded into the user interface system 2. One such carrier may be in the form of a CD ROM disc. It is however feasible with other data carriers such as a memory stick. The computer program code may furthermore be provided as pure program code on a server and downloaded to the user interface system 2. The user interface system 2 may further comprise a **memory 11** comprising one or more memory units. The memory 11 may be arranged to be used to store e.g. information, and further to store data, configurations, schedulings, and applications, to perform the methods herein when being executed in the user interface system 2. The processor 10, the memory 11, the adjustment determining unit 7, and the adapting unit 8 may for instance be implemented in one or several arbitrary **nodes 12**. A node 12 may be an electronic control unit (ECU) or any suitable generic electronic device. In a vehicle 1, such nodes 12 may involve one or a combination of for instance a climate system node, a cluster node, an infotainment node, a radio node, an entertainment node, a display controller node and/or a main central node. Those skilled in the art will also appreciate that the adjustment determining unit 7 and the adapting unit 8 described above, and which will be described in more detail later on in this description, may refer to a combination of analog and digital circuits, and/or one or more processors configured with software and/or firmware, e.g. stored in a memory such as the memory 11, that when executed by the one or more processors such as the processor 10 perform as will be described in more detail later on in this description. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

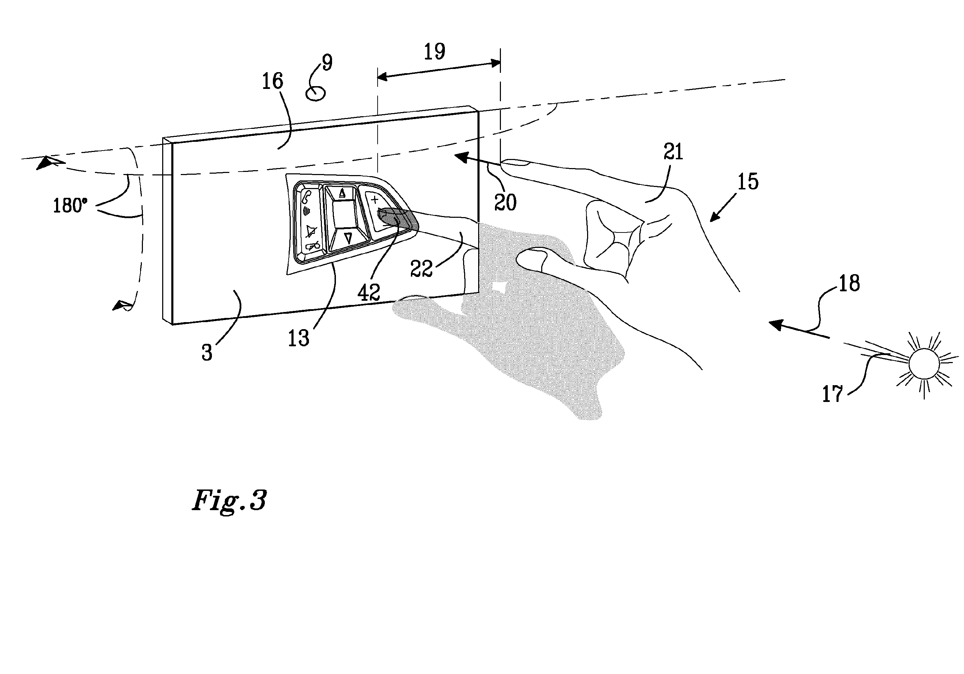

**Figure 3** depicts, similarly to Figure 1, **intensive directed light 17,** here substantially comprising sun light, in the **determined direction 18** of the intensive directed light. Figure 3, however, additionally shows an exemplifying **obstacle 15** in the vicinity of the display 3 according to embodiments of the disclosure. The obstacle 15 is here represented by a hand, and particularly an index finger, of a driver of the vehicle 1, approaching the display 3 in a determined **direction 20.** The obstacle 15 is positioned at a determined **distance 19** from the display 3, the front of which here is denoted **16,** and the obstacle has a determined **shape 21.** Some or all of said obstacle characteristics 19, 20, 21 may for instance be determined by the optional vicinity obstacle determining unit 9, here the proximity sensor 9. A **shadow 22** of the obstacle 15 is partly casted on the display 3, and subsequently a part thereof on the graphic visualization 13.

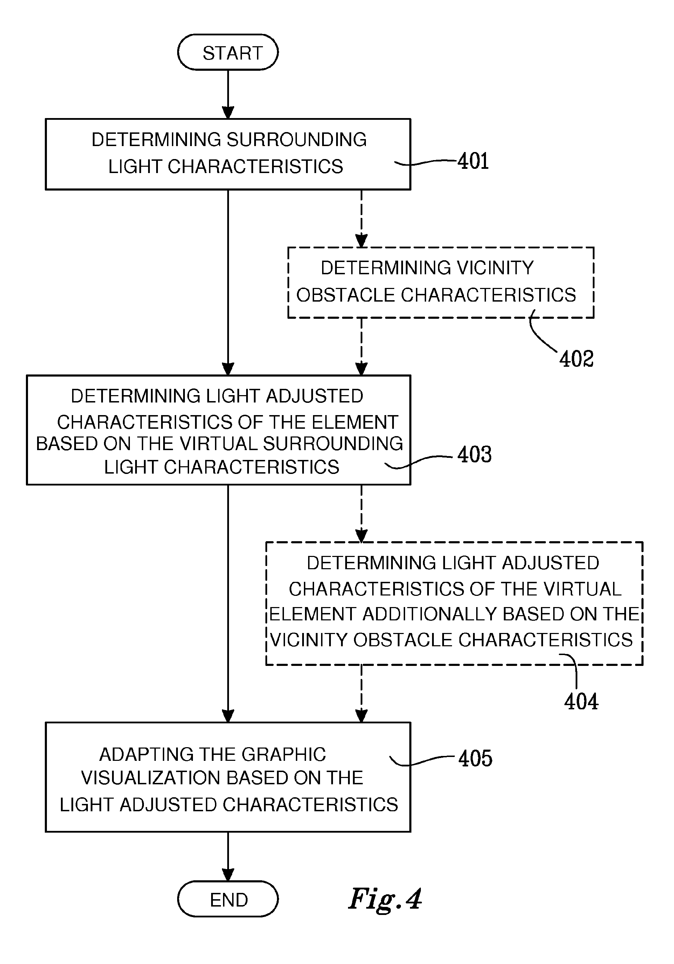

**Figure 4** is a flowchart depicting an exemplifying method for adapting the graphic visualization 13 of a virtual element 14 according to embodiments of the disclosure. The exemplifying method, which may be continuously repeated, comprises the following actions discussed with support from Figures 1-3, where the optional actions in particular relate to Figure 3. The actions may be taken in any suitable order.

### Action 401

In Action 401, the user interface system 2 determines, e.g. by means of the light determining unit 5, surrounding light characteristics of surrounding light associated with the display 3. According to embodiments herein, the surrounding light may comprise ambient light and/or intensive directed light 17 which is intensive relative to the ambient light. Here, the intensive directed light 17 substantially comprises sun light. According to embodiments herein, the surrounding light characteristics may comprise an ambient light property related to determined ambient light, an intensive directed light property related to determined intensive directed light, and/or an intensive directed light direction property related to the determined direction 18 of the intensive directed light.

### Action 402

In optional Action 402, the user interface system 2 may additionally determine, e.g. by means of the vicinity obstacle determining unit 9, vicinity obstacle characteristics of the obstacle 15 in the vicinity of the display 3, which obstacle 15 is within 180 degrees seen from all solid angles of the front 16 of the display 3. According to embodiments herein, the vicinity obstacle characteristics may comprise an obstacle distance property related to the determined distance 19 of the obstacle 15 from the display 3, and/or an obstacle shape property related to the determined shape 21 of the obstacle 15.

### Action 403

In Action 403, the user interface system 2 determines, e.g. by means of the adjustment determining unit 7, light adjusted characteristics of the virtual element 14 based on the surrounding light characteristics. The light adjusted characteristics may comprise one or a combination of a shadow property, an intensity property, an illumination property, a gloss property, a hue property, a color property, and a contrast property. According to embodiments herein, determination of the shadow property may be based on at least the intensive directed light direction property, and subsequently based at least on the determined direction 18 of the intensive directed light 17. According to yet another embodiment, determination of the shadow property may additionally be based on at least the obstacle distance property and/or the obstacle shape property, and hence based at least on an estimated projection of the obstacle 15 on the part of the display 3 allocated to the graphic visualization 13.

### Action 404

In optional Action 404, provided that vicinity obstacle characteristics have been determined, the user interface system 2 may determine, e.g. by means of the adjustment determining unit 7, the light adjusted characteristics of the virtual element 14 based on the surrounding light characteristics and the vicinity obstacle characteristics. According to embodiments herein, this may hence imply determining the light adjusted characteristics based on the ambient light property, the intensive directed light property, the intensive directed light direction property, the obstacle distance property, and/or the obstacle shape property.

### Action 405

In Action 405, the user interface system 2 adapts, e.g. by means of the adapting unit 8, the graphic visualization 13 based on the light adjusted characteristics, such that the graphic visualization 13 resembles the fictitious physical element should the fictitious physical element have been subjected to the surrounding light. Accordingly, by considering surrounding light conditions prior to adapting the graphic visualization 13 as suggested, the graphic visualization 13 may change appearance depending on surrounding light conditions. The rendering may hence change dynamically when the surrounding light conditions change, similar to the appearance of true physical elements, thus providing a more realistic appearance of the graphic visualization 13.

According to embodiments herein, the user interface system 2 may adapt the graphic visualization 13 by calculations performed essentially in real time, for instance by means of one or several of the previously mentioned nodes 12, with support from the processor 10 and/or memory 11. Alternatively, the adaptation of the graphic visualization 13 may comprise selecting a graphic visualization profile to represent the graphic visualization 13 from a set of predefined graphic visualization profiles. Preferably the best-fitting profile, i.e. pre-rendered graphic visualization, constituting the best match is selected from the predefined set, which set for instance is stored in memory 11.

According to embodiments herein, the adaptation of the graphic visualization 13 may be based on at least the shadow property, such that a virtual shadow of the virtual element 14 is applied in the graphic visualization 13 to resemble a shadow of the fictitious physical element should the fictitious physical element have been subjected to the intensive directed light 17. According to yet another embodiment, the adaptation of the graphic visualization 13 may, when the shadow property additionally is based on at least the obstacle distance property and/or the obstacle shape property, be based on the shadow property such that a **virtual shadow 42** of the virtual element 14 is applied in the graphic visualization 13 to resemble a shadow 22 of the fictitious physical element should the fictitious physical element have been subjected to the intensive directed light 17 and the obstacle 15. Accordingly, provided that the e.g. driver's finger 15 is in front of the display 3, and the vicinity obstacle characteristics in combination with the surrounding light characteristics hence indicate that the obstacle 15 appear to cast a shadow 22 on the section of the display 3 allocated to the graphic visualization 13, then the rendering process may take as well the obstacle 15 into account such that the virtual shadow 42 provide a more realistic appearance.

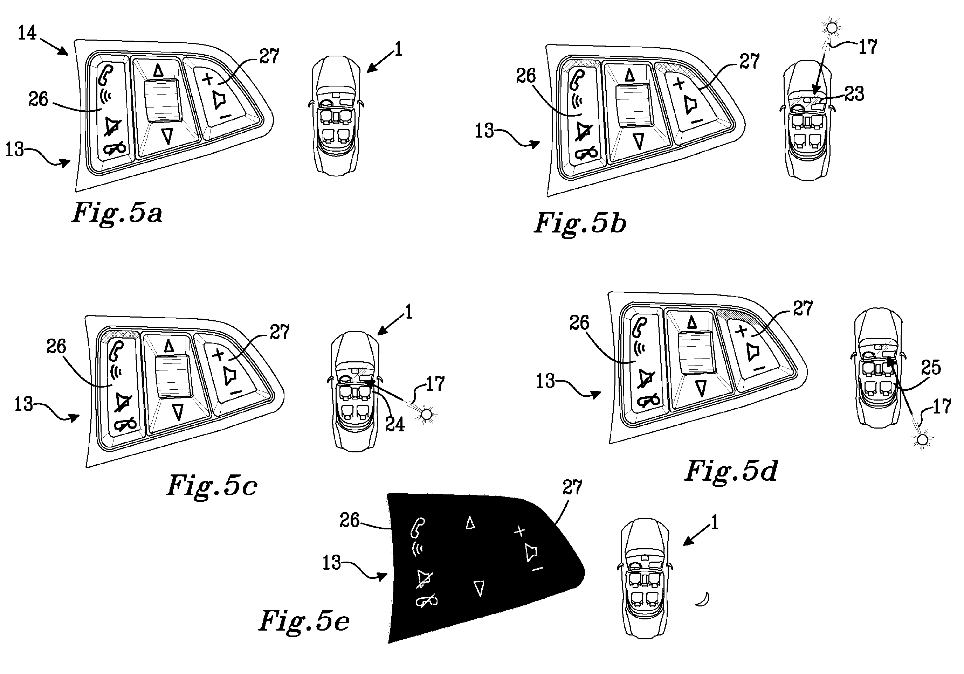

Figures 5a-e show varying exemplifying graphic visualizations 13 of the virtual element 14 of Figure 1 rendering a fictitious physical element, which is subjected to varying surrounding light. Accordingly, in the following, and with support from the previously mentioned Actions of Figure 4, examples are discussed with regards to how the graphic visualization 13 rendering the fictitious physical element may change appearance depending on surrounding light conditions, in order to be perceived as a true physical element. The virtual object 14 comprises a graphical representation of a wheel and two buttons, i.e. a **first button 26** and a **second button 27.**

In **Figure 5a**, the exemplifying conditions defining the surrounding light associated with the display 3, is daytime in combination with no direct sun. Such conditions may be interpreted as day light in combination with no intensive directed light 17. Accordingly, when the user interface system 2 in Action 401 determines light characteristics of surrounding light associated with the display 3, and in Action 403 determines light adjusted characteristics of the virtual element 14 based on the surrounding light characteristics, said conditions are considered. Then, when the user interface 2 adapts the graphic visualization 13 based on the light adjusted characteristics, such that the graphic visualization 13 resembles the fictitious physical element should the fictitious physical element have been subjected to the surrounding light, the graphic visualization 13 may be visualized as shown in Figure 5a. The graphic visualization 13 of Figure 5a may be considered to represent a "default" graphic visualization 13, when now moving on to the following graphic visualizations 13 of Figures 5b-e.

In **Figure 5b****,** the exemplifying condition defining the surrounding light, is sunshine through a **windshield 23** of the vehicle 1. Such a condition may be interpreted as day light in combination with intensive directed light 17 from behind the display 3. Accordingly, following previously mentioned Actions 401- 405 given said condition, the graphic visualization 13 may be visualized as shown in Figure 5b. The determined light adjusted characteristics which are here different as compared to the example of Figure 5a, has resulted in adaptation such that the graphic visualization 13 reflects current surrounding light conditions and hence is perceived differently as compared to the graphic visualization 13 of Figure 5a. Properties such as shadows, intensities, illuminations, gloss, hues, colors, and/or contrasts of the virtual element 14, which may have effect on different areas of the graphic visualization 13, may have been adapted such that the graphic visualization 13 realistically renders a corresponding fictitious physical element, should the fictitious physical element have been subjected to the surrounding light condition of Figure 5b. Here, as attempted to be illustrated, at least gloss on top sections of the graphical representations of the first button 26 and the second button 27 of the virtual element 14 have been modified to symbolize adaptation of the graphic visualization 13, and to indicate that the graphic visualization 13 is perceived differently as compared to Figure 5a. The adaptation with regards to for instance said gloss may decrease or increase in a gradient manner along the first and/or second buttons 26, 27.

In **Figure 5c****,** the exemplifying condition defining the surrounding light is sunshine through a **front side window 24** of the vehicle 1. Such a condition may be interpreted as day light in combination with intensive directed light 17 from a side direction of the display 3 with a relatively small angle of incidence. The intensive directed light 17 partly meet with a section of the display 3 allocated for the graphic visualization 13. Accordingly, following previously mentioned Actions 401- 405 given said condition, one or several of the previously mentioned properties with bearing on different areas of the graphic visualization 13, may have been adapted such that the graphic visualization 13 with high realism may be perceived as a corresponding fictitious element subjected to the surrounding light conditions of Figure 5c. Here, as illustrated, at least gloss on the top section of the graphical representation of the first button 26 of the virtual element 14 has been modified to symbolize adaptation of the graphic visualization 13, and to indicate that the graphic visualization 13 is perceived differently as compared to Figures 5a and 5b.

In **Figure 5d****,** the exemplifying condition defining the surrounding light is sunshine through a **rear side window 25** of the vehicle 1. Such a condition may be interpreted as day light in combination with intensive directed light 17 from a side direction of the display 3 with a relatively large angle of incidence. The intensive directed light 17 partly meet with a different section of the display 3 allocated for the graphic visualization 13, as compared to Figure 5c. Accordingly, following previously mentioned Actions 401- 405 given said condition, one or several of the previously mentioned properties with effect on different areas of the graphic visualization 13, may once again have been adapted such that the graphic visualization 13 realistically renders a corresponding fictitious physical element, should the fictitious physical element have been subjected to the surrounding light conditions of Figure 5d. Here, as illustrated, at least gloss on the top section of the graphical representation of the second button 27 of the virtual element 14 has been modified to symbolize adaptation of the graphic visualization 13, and to indicate that the graphic visualization 13 is perceived differently as compared to Figures 5a-c.

In **Figure 5e****,** the exemplifying condition defining the surrounding light is night time. Such a condition may be interpreted as relative darkness, i.e. low ambient light, in combination with no intensive directed light 17. Accordingly, following previously mentioned Actions 401- 405 given said condition, one or several of the previously mentioned properties with effect on different areas of the graphic visualization 13, may have yet again been adapted such that the graphic visualization 13 realistically renders a corresponding fictitious physical element, should the fictitious physical element have been subjected to the surrounding light conditions of Figure 5e. Here, as illustrated, at least gloss of the graphical representations of the first button 26 and the second button 27 along with their surrounding areas in the graphic visualization 13 have been modified to be perceived as relatively dark, with barely visible contours of the buttons 26, 27, to symbolize adaptation of the graphic visualization 13, and to indicate that the graphic visualization 13 is perceived differently as compared to Figures 5a-d.

Consequently, the rendering described in the foregoing giving a perceived impression of a physical element with high realism may change dynamically when the lighting situation surrounding the display 3 changes, just like the appearance of the true physical element. That is, the adaptation of the graphic visualization 13 of the virtual element 14 suggested by the disclosure may dynamically follow, i.e. reflect, the surrounding light situation which may be affected by for instance ambient light conditions, weather conditions, the sun and/or arbitrary spotlights such as e.g. street lighting, floodlight and courtesy light.

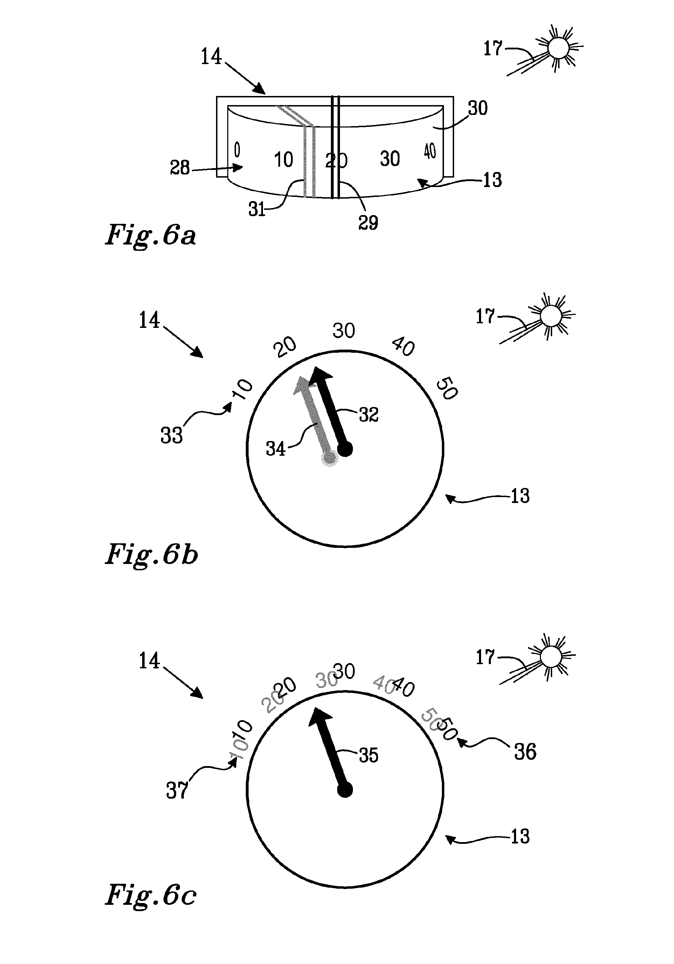

Figures 6a-e illustrate exemplifying graphic visualizations 13 of virtual elements 14 rendering varying fictitious physical elements according to embodiments of the disclosure. Accordingly, in the following there will be discussed virtual elements 14 each comprising a graphical representation of one of, or a combination of one or several of, 3-dimensional elements labelled with characters or symbols such as letters and numbers, markings, meters, and gauges, and/or objects or instruments such as bezels, buttons, knobs, and wheels.

In the embodiment of **Figure 6a****,** the imagined fictitious physical element is a bezel comprising a fixed marker indicating speed on a rotating scale, with the fixed marker being moveable along the curved surface of the bezel. Accordingly, as depicted in Figure 6a, the virtual element 14 comprises a graphical representation thereof with a virtual **bezel 28** and a virtual **fixed marker 29** indicating speed on a virtual **rotating scale 30.** As the virtual fixed marker 29 is intended to be perceived as being moveable along the curved surface of the virtual bezel 28, the graphic visualization 13 is thus intended to be perceived as having 3D dimensions. With intensive directed light 17 as illustrated in Figure 6a affecting the surrounding light conditions, and following previously mentioned Actions 401-405 given these conditions, the graphic visualization 13 resulting from the adaptation will comprise a **virtual shadow 31,** which realistically renders a shadow of the corresponding fictitious physical marker, should the fictitious physical marker have been subjected to the given surrounding light conditions, such as the given intensive directed light 17.

In the embodiment of **Figure 6b****,** the imagined fictitious physical element is a meter with a rotatable gauge indicating e.g. speed on a scale comprising e.g. number markings, with the rotatable gauge being in a plane different from a plane of the scale. Here, the plane of the rotatable gauge is positioned in front of the plane of the scale. Accordingly, as depicted in Figure 6b, the virtual element 14 comprises a graphical representation thereof with a virtual **rotatable gauge 32** indicating speed on a virtual **scale 33** comprising number markings. As the virtual rotatable gauge 32 is intended to be perceived as being in a plane positioned in front of a plane of the virtual scale 33, the graphic visualization 13 is thus intended to be perceived as having 3D dimensions. With intensive directed light 17 as illustrated in Figure 6b affecting the surrounding light conditions, and following previously mentioned Actions 401-405 given these conditions, the graphic visualization 13 resulting from the adaptation will comprise a **virtual shadow 34,** which realistically renders a shadow of the corresponding fictitious physical gauge, should the fictitious physical gauge have been subjected to the given surrounding light conditions, such as the given intensive directed light 17.

The exemplifying embodiment of **Figure 6c** is similar to that of Figure 6b, with the difference being that the plane of the scale here is in front of the plane of the rotatable gauge. Accordingly, as depicted in Figure 6c, the virtual element 14 comprises a graphical representation thereof with a virtual **rotatable gauge 35** indicating speed on a virtual **scale 36** comprising number markings. As the virtual scale 36 is intended to be perceived as being in a plane positioned in front of a plane of the virtual rotatable gauge 35, the graphic visualization 13 is thus intended to be perceived as having 3D dimensions. With intensive directed light 17 as illustrated in Figure 6c affecting the surrounding light conditions, and following previously mentioned Actions 401-405 given these conditions, the graphic visualization 13 resulting from the adaptation will comprise a **virtual shadow 37,** which realistically renders a shadow of the corresponding fictitious physical scale, should the fictitious physical scale have been subjected to the given surrounding light conditions, such as the given intensive directed light 17.

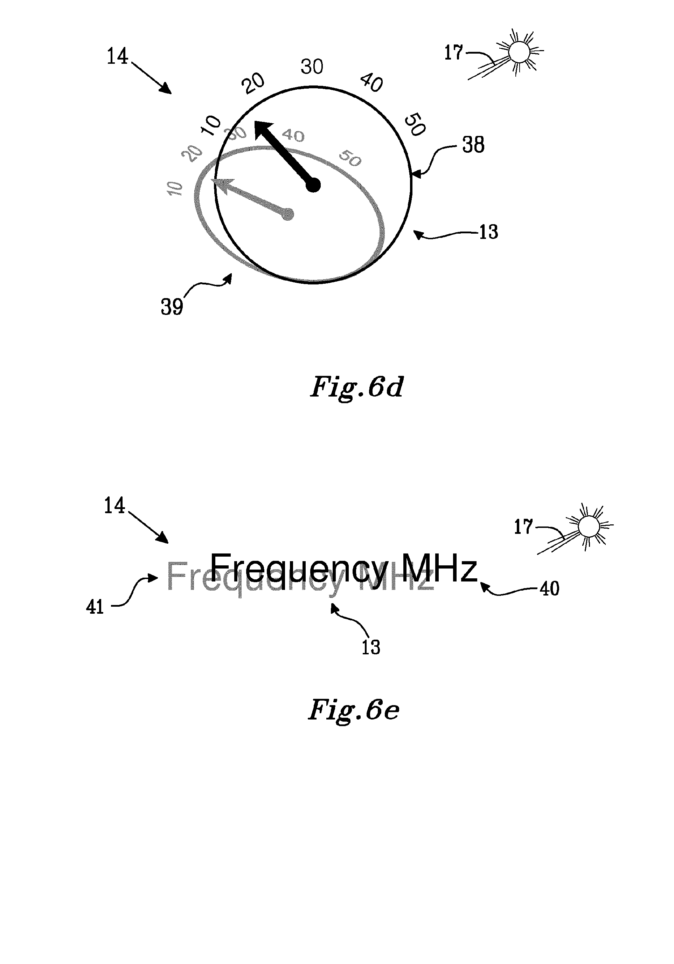

The exemplifying embodiment of **Figure 6d** is similar to those of Figures 6b and 6c, with the difference being that the rotatable gauge and scale of the meter here are in the same plane, with the plane, i.e. meter, leaning as compared to a vertical plane such that the meter would appear standing leaning on e.g. a horizontal surface. Accordingly, as depicted in Figure 6d, the virtual element 14 comprises a graphical representation thereof with a virtual **meter 38.** As the virtual meter 38 is intended to be perceived as standing leaning on a horizontal surface, the graphic visualization 13 is thus intended to be perceived as having 3D dimensions. With intensive directed light 17 as illustrated in Figure 6d affecting the surrounding light conditions, and following previously mentioned Actions 401-405 given these conditions, the graphic visualization 13 resulting from the adaptation will comprise a **virtual shadow 39,** which realistically renders a shadow of the corresponding fictitious physical meter, should the fictitious physical meter have been subjected to the given surrounding light conditions, such as the given intensive directed light 17.

In the embodiment of **Figure 6e****,** the fictitious physical element is an imagined display label, here comprising letters, positioned in a plane slightly in front of an information display. Accordingly, as depicted in Figure 6e, the virtual element 14 comprises a graphical representation thereof with a virtual **display label 40** comprising letters. As the display label 40 is intended to be perceived as being in a plane positioned in front of a plane of the display 3, the graphic visualization 13 is thus intended to be perceived as having 3D dimensions. With intensive directed light 17 as illustrated in Figure 6e affecting the surrounding light conditions, and following previously mentioned Actions 401-405 given these conditions, the graphic visualization 13 resulting from the adaptation will comprise a **virtual shadow 41,** which realistically renders a shadow of the corresponding fictitious physical display label, should the fictitious physical display label have been subjected to the given surrounding light conditions, such as the given intensive directed light 17.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a user interface system (2) for adapting a graphic visualization (13) of a virtual element (14) on a display (3), to render a corresponding fictitious physical element, said method comprising:
*determining* (401) surrounding light characteristics of surrounding light associated with said display (3);
*determining* (403) light adjusted characteristics of said virtual element (14) based on said surrounding light characteristics; and
*adapting* (405) said graphic visualization (13) based on said light adjusted characteristics, such that said graphic visualization (13) resembles said fictitious physical element should said fictitious physical element have been subjected to said surrounding light.

2. The method in accordance with claim 1, wherein said surrounding light comprises ambient light and/or intensive directed light (17) which is intensive relative to said ambient light, and wherein said surrounding light characteristics comprise:
an ambient light property related to determined ambient light, and/or
an intensive directed light property related to determined intensive directed light, and/or
an intensive directed light direction property related to a determined direction (18) of said intensive directed light (17).

3. The method in accordance with claim 1 or 2, wherein said light adjusted characteristics (2) comprise one or a combination of a shadow property, an intensity property, an illumination property, a gloss property, a hue property, a color property, and a contrast property.

4. The method in accordance with claim 3, further comprising:
*determining* said shadow property based on at least said intensive directed light direction property; and
*adapting* said graphic visualization (13) based on at least said shadow property such that a virtual shadow (31,34,37,39,41) of said virtual element (14) is applied in said graphic visualization (13) to resemble a shadow of said fictitious physical element should said fictitious physical element have been subjected to said intensive directed light (17).

5. The method in accordance with any one of the preceding claims, wherein said intensive directed light substantially comprises sun light.

6. The method in accordance with any one of the preceding claims, wherein said virtual element (14) comprises a graphical representation of one of, or a combination of one or several of, 3-dimensional elements labelled with characters or symbols such as letters (40) and numbers (36), markings (29), meters (38), and gauges (32), and/or objects or instruments such as bezels (28), buttons (26,27), knobs, and wheels.

7. The method in accordance with any one of the preceding claims, wherein the *adapting* (405) said graphic visualization comprises:
*selecting* a graphic visualization profile to represent said graphic visualization (13) from a set of predefined graphic visualization profiles.

8. The method in accordance with any one of the preceding claims, further comprising:
*determining* (402) vicinity obstacle characteristics of an obstacle (15) in the vicinity of said display (3), which obstacle (15) is within 180 degrees seen from all solid angles of a front of said display (3);
wherein said *determining* (403) light adjusted characteristics further comprises:
*determining* (404) light adjusted characteristics of said virtual element (14) based on said surrounding light characteristics and said vicinity obstacle characteristics.

9. The method in accordance with claim 8, wherein said vicinity obstacle characteristics comprise:
an obstacle distance property related to a determined distance (19) of said obstacle (15) from said display (3), and/or
an obstacle shape property related to a determined shape (21) of said obstacle.

10. The method in accordance with claim 9 in combination with clam 4, wherein said *determining* said shadow property further comprises:
*determining* said shadow property based on at least said intensive directed light direction property and at least said obstacle distance property and/or said obstacle shape property; and
wherein said *adapting* (405) said graphic visualization (13) further comprises:
*adapting* said graphic visualization (13) based on at least said shadow property such that a virtual shadow (42) of said virtual element (14) is applied in said graphic visualization (13) to resemble a shadow (22) of said fictitious physical element should said fictitious physical element have been subjected to said intensive directed light (17) and said obstacle (15).

11. A user interface system (2) for adapting a graphic visualization (13) of a virtual element (14) on a display (3) to render a corresponding fictitious physical element, said user interface system (2) comprising:
said **display** (3);
a **light determining unit** (5) for *determining* (401) surrounding light characteristics of surrounding light associated with said display (3),
an **adjustment determining unit** (7) for *determining* (403) light adjusted characteristics of said virtual element (14) based on said surrounding light characteristics; and
an **adapting unit** (8) for *adapting* (405) said graphic visualization (13) based on said light adjusted characteristics, such that said graphic visualization (13) resembles said fictitious physical element should said fictitious physical element have been subjected to said surrounding light.

12. The user interface system (2) in accordance with claim 11, further comprising:
a **vicinity obstacle determining unit** (9) for *determining* (402) vicinity obstacle characteristics of an obstacle (15) in the vicinity of said display (3), which obstacle (15) is within 180 degrees seen from all solid angles of a front (16) of said display (3),
wherein said adjustment determining unit (7) further is adapted for *determining* (404) light adjusted characteristics of said virtual element (14) based on said surrounding light characteristics and said vicinity obstacle characteristics.

13. The user interface system (2) in accordance with claim 11 or 12, wherein said light determining unit (5) comprises one or a combination of sensors, such as an ambient light sensor, a light intensity sensor, e.g. a sun intensity sensor, a light frequency sensor, and a light direction sensor, e.g. a sun direction sensor or a climate sun sensor, and/or said vicinity obstacle determining unit (9) comprises one or a combination of sensors, such as a vicinity sensor, e.g. a proximity sensor.

14. The user interface system (2) in accordance with any one of claims 11-13, wherein said display (3) comprises a touch screen.

15. A vehicle (1) comprising the user interface system (2) in accordance with any one of claims 11-14, wherein said display (3) is fixedly mounted in said vehicle (1), and preferably comprised in an instrument panel, a center stack (4), a cluster and/or a dashboard (2) of said vehicle (1).
